# EUROPEAN PATENT SPECIFICATION

(11) **EP 0 298 707 B1**
(45) Date of publication and mention of the grant of the patent: **28.09.1994**
(21) Application number: 88306128.5
(22) Date of filing: 06.07.1988
(51) Int. Cl.: H02J 7/00, G04C 10/00

(54) **Charging device for electronic apparatus**
Ladevorrichtung für elektronisches Gerät
Dispositif de charge pour appareil électronique

(30) Priority: 10.07.1987 JP 106457/87 U; 15.07.1987 JP 176399/87; 15.07.1987 JP 176400/87; 15.07.1987 JP 176401/87
(43) Date of publication of application: 11.01.1989
(73) Proprietor: SEIKO EPSON CORPORATION, Shinjuku-ku Tokyo-to (JP)
(72) Inventor: Sakamoto, Kenji, Suwa-shi Nagano-ken (JP); Hayakawa, Motomu, Suwa-shi Nagano-ken (JP); Ishikawa, Nobuo, Suwa-shi Nagano-ken (JP)
(74) Representative: Sturt, Clifford Mark

(56) References cited:
- EP-A- 0 170 303
- GB-A- 2 149 548
- GB-A- 2 198 601
- PATENT ABSTRACTS OF JAPAN vol. 2, no. 84 (E-42) 08 July 1978,& JP-A-53 48570 (SEIKO EPSON CORP) 02 May 1978,
- PATENT ABSTRACTS OF JAPAN vol. 2, no. 33 (E-19) 06 March 1978,& JP-A-52 154665 (SEIKO INSTR & ELECTRONICS LTD) 22 December 1977,
- PATENT ABSTRACTS OF JAPAN vol. 2, no. 116 (E-60) 27 September 1978, & JP-A-53 82473 (SEIKO INSTR & ELECTRONICS LTD) 20 July 1978,
- PATENT ABSTRACTS OF JAPAN vol. 10, no. 22 (P-424)(2079) 28 January 1986,& JP-A-60 174976 (SUWA SEIKO KK) 09 September 1985,
- PATENT ABSTRACTS OF JAPAN vol. 10, no. 183 (P-472)(2239) 26 June 1986,& JP-A-61 29783 (SEIKO INSTR & ELECTRONICS LTD) 10 February 1986,
- NTIS TECH NOTES. February 1987, SPRINGFIELD, VA US page 150 "ferroresonant flux-coupled battery charger"
- NTIS TECH NOTES. vol. b, no. 10, October 1985, SPRINGFIELD, VA US page 1171 "flux coupling for wheelchair battery chargers"

## Description

The present invention relates to charging devices for electronic apparatus.

A typical charging device for electronic apparatus, such as an analog electronic time-piece, employs a solar battery as a part of a dial plate, arranged so that electric power produced by illumination of the solar battery charges a secondary battery. It is known from Japanese Patent Laid-Open Application No. 154665/77, Japanese Patent Laid-Open Application No. 11846/74, and Japanese Utility Model Publication No. 4240/81, that another charging device employs a charging terminal at the external portion of the time-piece, arranged so that the electric power charges a secondary battery depending on the contact with an external power source. Further, it is known from Japanese Patent Laid-Open Application No. 29783/86 that a charging device may employ an electro-magnetic connecting charge coil disposed inside a time-piece, arranged so that a magnetic field is supplied to the electro-magnetic connecting charge coil from the exterior to charge the secondary battery. In the charging device employing the electro-magnetic connecting charge coil, a counting coincidence circuit is provided in the time-piece to count the charging time. During charging, a motor is regulated and the motor driving circuit is turned to the "OFF" state. To overcome this, compensating means is provided for compensating the delay of the charging time.

However, such previous proposals have the following disadvantages.

First, when a solar battery system or charging terminal system is used, the design of the external appearance of the wrist watch is limited, because the wrist watch has a small size. Therefore, it is difficult to apply the solar battery or the charging terminal to analog electronic wrist watches of which the ornamental appearance is commercially important.

Next, as to the electro-magnetic connecting system described in Japanese Patent Laid-Open Application No. 29783/86, the magnetic field supplied to the wrist watch affects a stepping motor for driving the hands, resulting in mis-operation of the hands. Therefore, during charging, motor control means, counting means and compensating means are required, so that the design of the wrist watch is limited and the cost becomes large. Further, when the charging device is used as a window display for such a wrist watch, it is necessary to stop the movement of the hands during charging, thereby making the image of the products worse. Another disadvantage is that charging may affect other analog time-pieces displayed near the window display.

To eliminate the above problems, the present invention seeks to provide a small sized, low cost charging device for electronic apparatus, such as analog wrist watches, to provide a charging device which does not affect the function of the electronic apparatus, such as a wrist watch, and to provide a charging device which enables the charging operation to be effected in a short time with a low consumption of energy, for example in a display in a shop window.

In Japanese Patent Laid-Open Application No. 48570/79, there is disclosed a watch driven by a battery connected through a rectifying circuit to a coil wound on a core. By placing the watch within magnetic fields, induced voltage is generated in the coil, so that the battery in the watch is charged without removal from the watch.

In Japanese Patent Laid-Open Application No. 82473/79, there is disclosed a charging device for re-charging a re-chargeable battery in an electronic watch. The charging device is an a.c. magnetism generator including a coil to which alternating current is applied. The watch includes a coil electrically connected to the re-chargeable battery through a rectifier circuit. During charging, the watch is disposed close to the charging device, so that alternating current is electro-magnetically induced in the coil and used to recharge the battery.

The invention seeks to improve the efficiency of the electromagnetic transmission of energy in such an arrangement.

Accordingly, a charging device for re-charging a re-chargeable power source in electronic apparatus, including charging coil means and means to apply current to the charging coil means at a predetermined frequency, the electronic apparatus including secondary coil means electrically connected to the rechargeable power source, and the charging coil means being so disposed that the secondary coil means in an electronic apparatus associated with the charging device has a current of the predetermined frequency electro-magnetically induced therein to re-charge the re-chargeable source, is characterised in that the charging coil means comprises a pair of charging coils of annular or ring-shaped formation, disposed adjacent to each other, the polarity of one of the charging coils being opposite to the other of the charging coils, so as to produce opposite magnetic fields at the outer faces of the charging coils.

Preferably, a coil yoke of magnetic permeable material is disposed across the charging coils on the side remote from that close to which the secondary coil means in an electronic apparatus is intended to be placed.

The secondary coil means may have a core of magnetic permeable material across the charging coils of an electronic apparatus associated with the charging device.

The means for applying current to the charging coils may include an oscillator circuit and switching circuits controlled by the output from the oscillator circuit.

The charging coils are preferably of substantially triangular shape.

Conveniently, the charging coils are connected in series.

In the case when the electronic apparatus includes a component or components liable to be affected by induced current, the predetermined frequency is with advantage outside the range of frequencies within which such component or components is or are affected.

The component in the electronic apparatus, which is liable to be affected, may be a motor having a permanent magnetic rotor.

The frequency is preferably greater than 200 Hz, 500 Hz or even 600 Hz. To achieve a high charging efficiency, the frequency may be approximately 1 kHz.

The device may include a case capable of receiving an electronic apparatus adjacent the charging coils.

For a fuller understanding of the invention, reference may be had to the following description, with reference to the accompanying drawings, in which:-
Figure 1 is a circuit diagram of one embodiment of a charging device according to the present invention for electronic apparatus;
Figure 2 is a perspective diagrammatic-view of the structure of the charging coils in the device of Figure 1;
Figure 3 is a similar view of another structure of the charging coils in that device;
Figure 4 is a timing chart showing the energising timing of the charging coils and other parts of the circuit of Figure 1;
Figure 5 is a diagrammatic view to assist explanation of the theory of the charging device of the present invention;
Figure 6 is a graph showing the relation between a rotor moment of inertia and the limit of magnetic field frequency;
Figure 7 is a graph showing the relation between the energising frequency of the charging coils and the induced current;
Figure 8 is a perspective view of a charging device with an analog electronic wrist watch in position for charging; and
Figure 9 is a scrap view, partly in section, showing the assembled structure of the charging coil and the case.

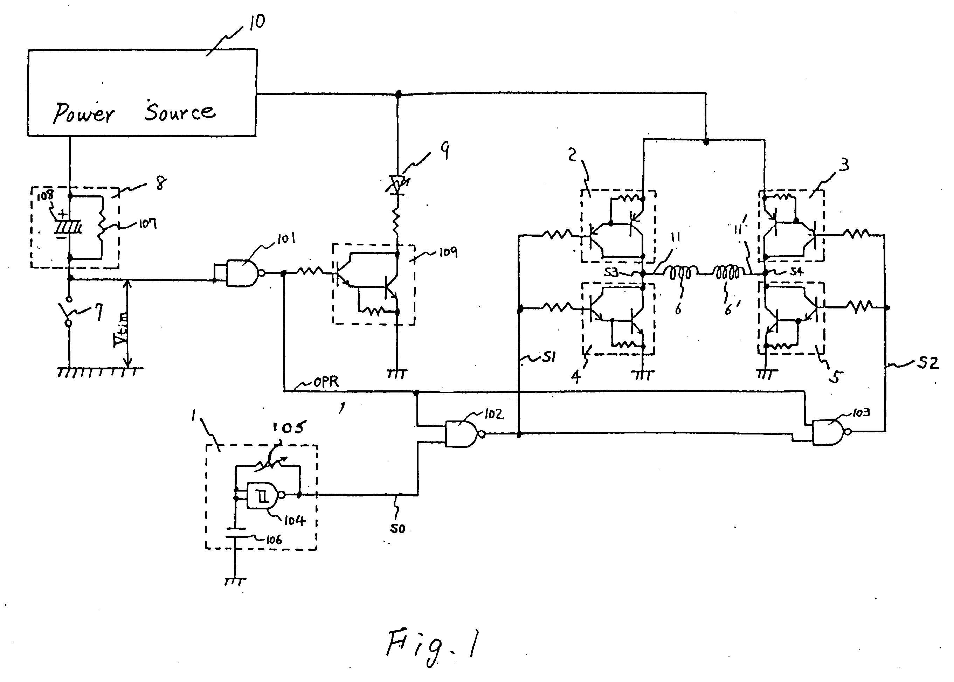

A charging device (Figure 1) for an electronic apparatus according to the present invention, includes an oscillator 1, four switching circuits 2, 3, 4 and 5, charging coils 6 and 6′, a manual switch 7, a timer 8 which starts charging operation when the switch 7 is closed and stops the charging operation a predetermined time after the switch 7 is re-opened a display 9 such as a light emitting diode, to indicate that charging is being carried out, and a power source 10.

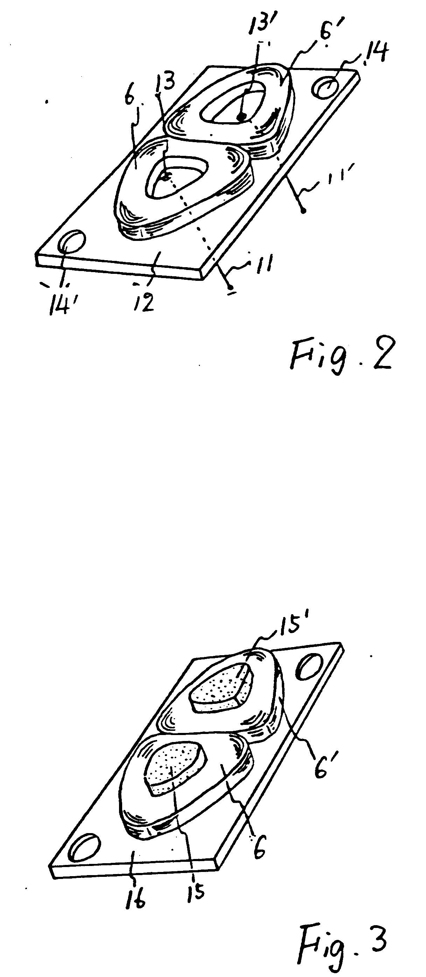

The charging coils 6 and 6′ (Figure 2) are of annular or ring-shaped formation and are coupled to a coil yoke 12 consisting of an iron plate, a steel plate, or a plate of magnetic permeable material. Each turn of each charging coil has a substantially triangular shape, though it may have another configuration, such as circular. The resultant coils are thus of generally ring-shape. The pair of charging coils 6 and 6′ may be connected in series or in parallel and in the Figure 2 embodiment, adjacent ends of the coils are connected. The other ends 11 and 11′ pass through holes 13 and 13′ in the coil yoke 12. Upon passing electric current through the coils 6 and 6′ from end 11 to end 11′, a magnetic field is generated by each of the coils. The connection between the coils 6 and 6′ is such that the polarity of the outer face of one coil 6 (that is the face not in contact with the yoke 12) is the opposite of the polarity of the outer face of the other coil 6′. If the current is AC, then the magnetic fields generated alternate, as do the magnetic polarities of the outer and the inner faces. The magnetic fields are opposite to each other, so that when the outer face of the charging coil 6 is of N polarity, the outer face of the charging coil 6′ is of S polarity. Such a system is easily obtained by connecting the winding start ends of the charging coils 6 and 6′ to each other or by connecting the winding finish ends to each other, or by arranging the winding directions of the charging coils 6 and 6′ to be opposite to each other, or by reversing the dispostions of the respective coils on the yoke 12. The coil yoke 12 can be secured in position by fixing screws 25 and 25′ (Figure 9) extending through holes 14 and 14′ (Figure 2).

In a modification of such a charging device according to the present invention, the coils 6 and 6′ are wound around magnetic cores 15 and 15′ made of, for example, malleable iron and are fixed to a substrate 16 made of plastics material, glass epoxy or the like. The cores 15 and 15′ are preferably magnetically connected by magnetic material on the inner faces thereof.

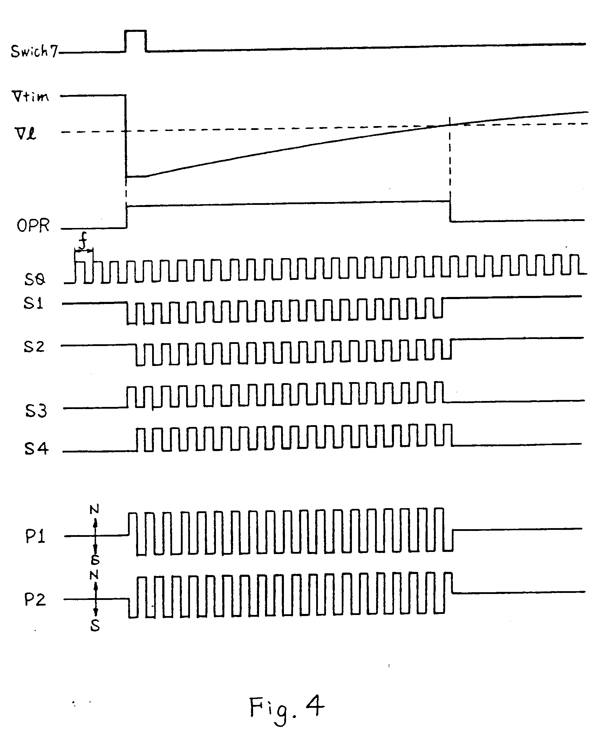

Reference is made to the timing chart of Figure 4, which shows the timing for operation of the circuit and for energisation of the coils. When the manual switch 7 is closed, the voltage Vtim across the switch is reduced to a low level and a capacitor 108 (Figure 1) of the timer 8 is charged by the power source 10. When the switch 7 is re-opened, the charge in the capacitor 108 is discharged gradually through a resistor 107 of the timer 8, the rate of discharge being determined by the time constant of the resistance of the resistor and the capacitance of the capacitor. During discharge of the capacitor 108, the voltage Vtim increases gradually (Figure 4), passes a logic level V1 and approaches a high level. The voltage Vtim is input to a NAND gate 101, whose output signal OPR is high when the voltage Vtim is less than the logic level V1. Thus the signal OPR is high from the closure of the switch 7 until a predetermined time after the re-opening of the switch 7 set by the time constant of the timer 8. The signal OPR is applied to a transistor circuit 109 which drives an LED 9 whose lighting up indicates that the signal OPR is high and that the device is charging.

The signal OPR is also applied as one input to two NAND gates 102 and 103. The other input of the NAND gate 102 is an output signal S0 generated by the oscillator 1. The other input of the NAND gates 103 is the output signal S1 of the NAND gate 102. The oscillator 1 is a CR oscillator comprising a Schmitt-Trigger type NAND gate 104, a capacitor 106 and a resistor 105, which oscillator uses the input hysteresis of the NAND gate. When the signal OPR is low, the output signals S1 and S2 of the NAND gates 102 and 103, respectively, are high. As a result, the switching circuits 4 and 5 are in the ON state, and the switching circuits 2 and 3 are in the OFF state. The voltages S3 and S4 at the ends 11 and 11′ of the coils 6 and 6′, respectively, are low so that no charging current is applied to the coils 6 and 6′, and no charging occurs.

When the signal OPR is high, the signal S1 from the NAND gate 102 is the inverted signal S0, whilst the signal S2 from the NAND gate 103 is the doubly inverted signal S0, that is, the signal S0 without inversion. The frequency of the oscillator 1 is such that the signals S0 have a period f. As the signal S1 falls to a low level (Figure 4), the switching circuit 4 goes to the OFF state and the switching circuit 2 goes to the ON state. The voltage S3 rises to a high level. At this time, the signal S2 is at a high level and the voltage S4 is low. Accordingly, current flows through the coils 6 and 6′ When the signal S1 rises to a high level, the switching circuit 2 goes to an OFF state and the switching circuit 4 goes to the ON state. Reducing the voltage S3 to a low level. At the same time, the signal S2 falls to a low level, turning the switching circuit 5 to the OFF state and the switching circuit 3 to the ON state. The voltage S4 rises to a high level and current again flows through the coils 6 and 6′, but in the opposite direction. During this charging, the voltage S3 and S4 rise and fall in opposite phase. Thus the charging causes the coils to produce an alternating magnetic field at a frequency whose period is f. The magnetic polarities P1 and P2 due to the generated alternating magnetic fields on the outer faces of the coils 6 and 6′, alternate in a similar manner and at the same frequency.

Other circuits can be used to provide the alternating current to be applied to the coils 6 and 6′. Thus instead of the oscillator shown, a quartz oscillator or a ceramic oscillating circuit may be used. In the circuit shown, the oscillator 1 is driven by the power source 10, but it can be arranged that the oscillator is only operated during charging by controlling the power supplied to the oscillator from the timer 8.

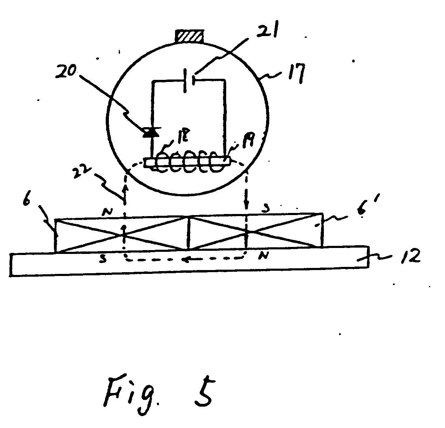

To explain the theory behind the charging device of the present invention, when the charging coils are energised as described above, part of the charging device as shown in Figure 5 is applied to the charging of an analog electronic wrist watch. The re-chargeable analog electronic wrist watch 17 has a re-chargeable, secondary battery 21 as its power source, which is in a series circuit with a rectifier or rectifying circuit 20 and a secondary coil 18. This coil 18 has a magnetic core 19. The watch 17 is disposed with the core 19 across the magnetic fields of the charging coils 6 and 6′ on the coil yoke 12.

Magnetic flux 22 generated in the charging coils when the charging device is switched on, passes along the magnetic circuit composed of the coil yoke 12, the coils 6 and 6′ and the magnetic core 19 of the secondary coil 18. That is from the outer face of the coil 6, through the magnetic core 19, through the outer face of the coil 6′ to the inner face thereof, through the coil yoke 12, and the inner face of the coil 6, back to the outer face thereof. With such magnetic flux, voltage is induced across the secondary coil 18 and current flows through the series circuit including the rectifying circuit 20 to the secondary battery 21 to charge it. Because the charging coils 6 and 6′ are fixed on the coil yoke 12, most of the magnetic flux generated from the charging coils passes within the coil yoke 12, thereby making it possible to provide the effective magnetic path mentioned above. Without such a coil yoke, much magnetic flux leaks into the air, and as a result, charging efficiency is lowered. Further, because the respective polarities of the coils 6 and 6′ are opposite and thus differ from each other by 180°, such a construction enables the magnetic flux which passes the magnetic core of the secondary coil to be increased. The magnetic flux generated from the charging coil 6 passes along the magnetic core 19 and passes across the other charging coil 6′ securely, so that the charging efficiency is increased. If the polarity of one charging coil is the same as that of the other coil, the magnetic fluxes repel each other and as a result, the amount of the magnetic flux in the core 19 is decreased and the charging efficiency is decreased. Therefore, a charging device according to the present invention, enables the charging efficiency to be increased.

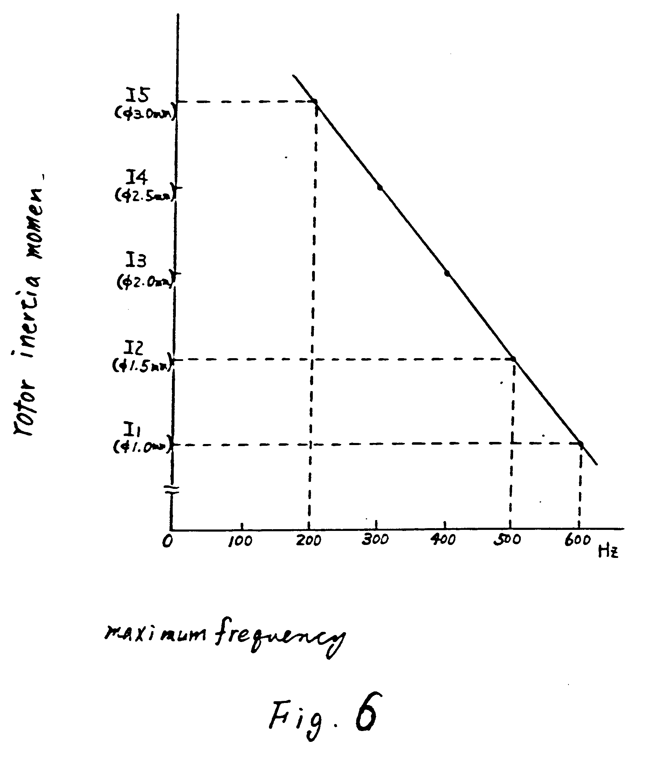

The selection of a frequency for energising the coils to re-charge the battery in an analog electronic wrist watch driven by a stepping motor, must take into consideration the effect upon the rotor of the stepping motor of such frequency and it has been found that this is related to the moment of inertia of the rotor. This relationship is illustrated in Figure 6, which is a graph showing the relation between the limit frequency of AC magnetic field and the moment of inertia of the rotor (the rotor diameter being indicated as a parameter), when the rotor of the stepping motor for driving the movement of the electronic wrist watch is not affected. The value of the frequency is the maximum one below which the movement of the hands may be affected by any mis-operation or vibration or the like, and is thus also the minimum one above which such movement is not so affected. When the moment of inertia of the rotor is I5 and the rotor diameter is 3.0 mm, the rotor cannot be operated by pulses at a frequency greater than 200 Hz. Therefore, if the frequency for energising the coils is predetermined so as to be more than 200 Hz, the movement of the hands is not affected. Similarly, when the moment of inertia of the rotor is I1 and the rotor diameter is 1.0 mm, the charging frequency is predetermined so as to be more than 600 Hz, so that the movment of the hands is not affected. In general, in an analog electronic wrist watch, the rotor diameter is approximately 3.0 mm at most in view of the limitation of space and the rotor diameter is at least approximately 1.0 mm to provide sufficient power to the hands in the light of the capacity of the rotor magnet. Most small sized thin analog electronic wrist watches have a rotor diameter of about 1.5 mm. In this case, when the frequency is greater than 500 Hz, there is no problem in practice.

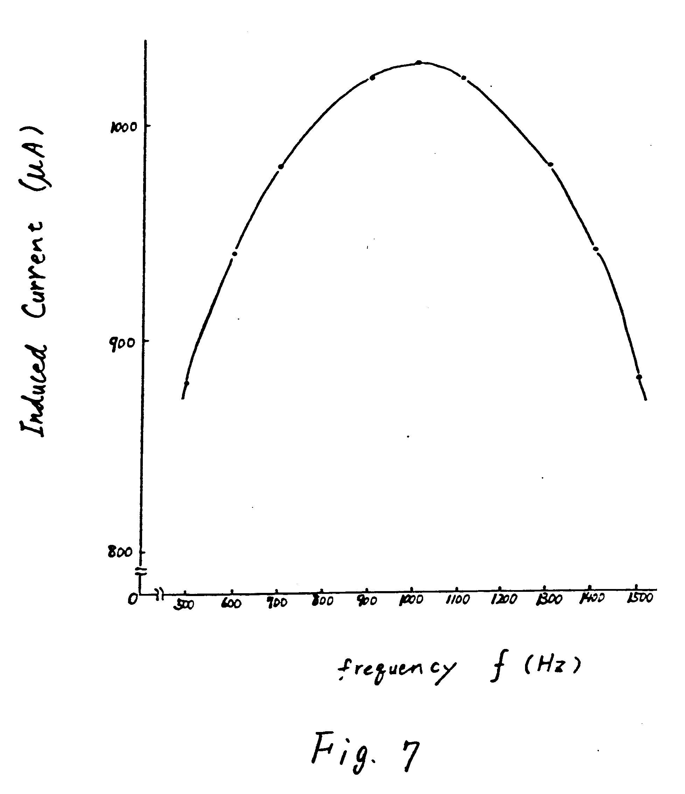

The selection of a frequency for energising the charging coils also must take into consideration the current to be induced in the secondary coil in the electronic apparatus. This, in turn, is affected by the size and number of turns of the coils and their inductances. As an example, illustrating the relationship, Figure 7 is a graph of frequency for energising the charging coil and induced current flowing to the secondary battery 21 from the secondary coil 18. In the example, each of the charging coils 6 and 6′ has a wire diameter of 0.3 mm, 170 wound turns and an inductance of 0.64 mH. The secondary coil 18 has a wire diameter of 0.035 mm, 3830 wound turns, and an inductance of 0.5 H. As shown in Figure 7, the induced current is highest when the frequency is near 1000 Hz. Because such a frequency is more than that required to have no effect upon the movement of hands, as shown in Figure 6, the energising frequency of the charging coils, that is, the frequency of the output signal to the oscillator 1, is predetermined so as to be approximately 1000 Hz.

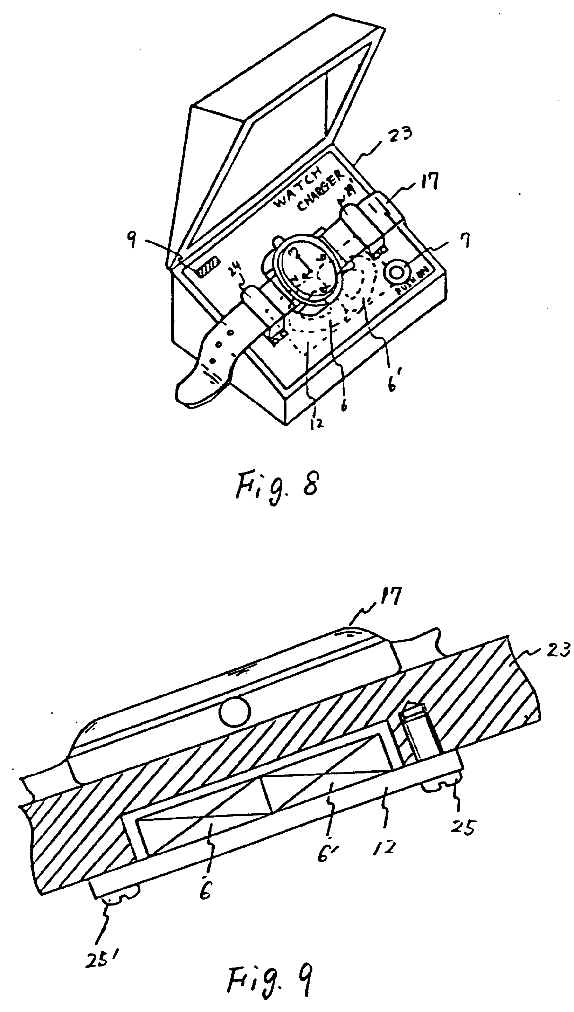

In a practical embodiment of the present invention (Figure 8) a charging device for an analog electronic wrist watch has a case 23 with a flat inclined surface under a hinged lid. In the inclined surface is the manual switch 7 and the LED display 9 which indicates that charging is in progress.

An analog electronic wrist watch 17 including a secondary coil 18 (Figure 5) therein can be mounted in a predetermined position on the inclined surface by hooks 24 and 24′ which engage watch straps on either side of the watch 17. The charging coils 6 and 6′ are disposed inside the case 23 with the coil yoke 12 (Figure 9) secured to the case 23 by screws 25 and 25′ extending through holes 14 and 14′ (Figure 2) in the coil yoke 12. Other fixing means, such as adhesive may be used instead of screws. The hooks 24 and 24′ (Figure 8) determine the position in which the analog electronic wrist watch 17 is mounted on the charging device, so that relative positions of the charging coils 6 and 6′ and the secondary coil 18 disposed inside the electronic wrist watch 17 are determined. Thus the core 19 (Figure 5) within the secondary coil 18 crosses from one coil 6 to the other coil 6′ with the axis of the coil 18 parallel to the axis of the charging coils, and good charging efficiency is obtained.

As described hereinbefore, in accordance with the present invention, the charging device is superior in efficiency and does not affect the function of the electronic apparatus, for example, does not cause any damage against movement of hands of the analog electronic wrist watch. Electro-magnetic induction is used to transmit the energy needed in the charging process, so that no mechanical or electrical connection into the electronic apparatus is required. Thus, the ornamental appearance of the electronic apparatus is not affected.

The charging device according to the present invention for electronic apparatus is described for use with an analog electronic wrist watch, but the present invention is applicable to a charging device for card-type pocket radios, liquid crystal pocket TVs and the like.

## Claims

1. A charging device for recharging a re-chargeable power source (21) in electronic apparatus (17), including charging coil means (6,6′) and means (1,2,3,4,5) to apply current to the charging coil means at a predetermined frequency, the electronic apparatus including secondary coil means (18) electrically connected to the re-chargeable power source, and the charging coil means being so disposed that the secondary coil means in an electronic apparatus associated with the charging device has a current of the predetermined frequency electro-magnetically induced therein to re-charge the re-chargeable source, characterised in that the charging coil means comprises a pair of charging coils (6,6′) of annular or ring-shaped formation, disposed adjacent to each other, the polarity of one of the charging coils being opposite to the other of the charging coils, so as to produce opposite magnetic fields at the outer faces of the charging coils.

2. A device as claimed in claim 1, characterised in that a coil yoke (12) of magnetic permeable material is disposed across the charging coils (6, 6′) on the side remote from that close to which the secondary coil means (18) in an electronic apparatus (17) is intended to be placed.

3. A device as claimed in claim 1 or 2, wherein the secondary coil means (18) has a core (19) of magnetic permeable material across the charging coils (6,6′) of an electronic apparatus associated with the charging device.

4. A device as claimed in claim 1,2 or 3, wherein the means for applying current to the charging coils (6, 6′) includes an oscillator circuit (1) and switching circuits (2,3,4,5) controlled by the output from the oscillator circuit (1).

5. A device as claimed in any preceding claim, wherein the charging coils (6,6′) are of substantially triangular shape.

6. A device as claimed in any preceding claim, wherein the charging coils (6,6′) are connected in series.

7. A device as claimed in any preceding claim, wherein the electronic apparatus (17) includes a component or components liable to be affected by induced electrical current, characterised in that the predetermined frequency is outside the range of frequencies within which such component or components is or are affected.

8. A device as claimed in claim 7, wherein the component in the electronic apparatus (17), which is liable to be affected, is a motor having a permanent magnet rotor.

9. A device as claimed in claim 7 or 8, wherein the frequency is greater than 200 Hz.

10. A device as claimed in claim 9, wherein the frequency is greater than 500 Hz.

11. A device as claimed in claim 10, wherein the frequency is greater than 600 Hz.

12. A device as claimed in claim 11, wherein the frequency is predetermined to have a high charging efficiency, and is approximately 1kHz.

13. A device as claimed in any preceding claim, including a case (23) capable of receiving an electronic apparatus (17) adjacent the charging coils (6,6′).

## Patentansprüche

1. Ladevorrichtung zur Wiederaufladung einer wiederaufladbaren Spannungsquelle (21) in einem elektronischen Gerät (17) mit Ladewicklungsmitteln (6, 6′) und Mitteln (1, 2, 3, 4, 5) zur Einspeisung eines Stroms mit vorgegebener Frequenz in die Ladewicklungsmittel, wobei das elektronische Gerät elektrisch mit der wiederaufladbaren Spannungsquelle verbundene Sekundärwicklungsmittel (18) enthält und die Ladewicklungsmittel so angeordnet sind, daß in den Sekundärwicklungsmitteln in einem der Ladevorrichtung zugeordneten elektronischen Gerät zur Wiederaufladung der wiederaufladbaren Quelle elektromagnetisch ein Strom der vorgegebenen Frequenz induziert wird, **dadurch** **gekennzeichnet**, daß die Ladewicklungsmittel ein Paar von benachbart zueinander angeordneten Ladewicklungen (6, 6′) ring- oder reifenförmiger Ausbildung umfassen, bei denen die Polarität einer der Ladewicklungen entgegengesetzt zur anderen Ladewicklung ist, um gegensinnige Magnetfelder an den Außenflächen der Ladewicklungen zu erzeugen.

2. Vorrichtung nach Anspruch 1, **dadurch** **gekennzeichnet**, daß über den Ladewicklungen (6, 6′) auf der Seite, welche der Seite abgekehrt ist, nahe der die Sekundärwicklungsmittel (18) in einem elektronischen Gerät (17) angeordnet werden sollen, ein Wicklungsjoch (12) aus magnetisch permeablem Material angeordnet ist.

3. Vorrichtung nach Anspruch 1 oder 2, in der die Sekundärwicklungsmittel (18) einen Kern (19) aus magnetisch permeablem Material über den Ladewicklungen (6, 6′) eines der Ladevorrichtung zugeordneten elektronischen Gerätes besitzen.

4. Vorrichtung nach Anspruch 1, 2 oder 3, in der die Mittel zur Einspeisung von Strom in die Ladewicklungen (6, 6′) eine Oszillatorschaltung (1) sowie durch das Ausgangssignal der Oszillatorschaltung (1) gesteuerte Schalterschaltungen (2, 3, 4, 5) enthalten.

5. Vorrichtung nach den vorhergehenden Ansprüchen, in der die Ladewicklungen (6, 6′) im wesentlichen Dreieckform besitzen.

6. Vorrichtung nach den vorhergehenden Ansprüchen, in der die Ladewicklungen (6, 6′) in Serie geschaltet sind.

7. Vorrichtung nach den vorhergehenden Ansprüchen, in der das elektronische Gerät (17) eine Komponente oder Komponenten enthält, welche durch induzierten elektrischen Strom beeinflußt werden können, **dadurch** **gekennzeichnet**, daß die vorgegebene Frequenz außerhalb des Frequenzbereiches liegt, in dem die Komponente bzw. die Komponenten beeinflußt werden.

8. Vorrichtung nach Anspruch 7, in der die Komponente im elektronischen Gerät (17), welche beeinflußt werden kann, ein einen Permanentmagnetrotor besitzender Motor ist.

9. Vorrichtung nach Anspruch 7 oder 8, in der die Frequenz größer als 200 Hz ist.

10. Vorrichtung nach Anspruch 9, in der die Frequenz größer als 500 Hz ist.

11. Vorrichtung nach Anspruch 10, in der die Frequenz größer als 600 Hz ist.

12. Vorrichtung nach Anspruch 11, in der die Frequenz als einen großen Ladewirkungsgrad besitzend vorgegeben und etwa gleich 1 kHz ist.

13. Vorrichtung nach den vorhergehenden Ansprüchen enthaltend ein Gehäuse (23), das ein elektronisches Gerät (17) benachbart zu den Ladewicklungen (6, 6′) aufnehmen kann.

## Revendications

1. Dispositif de chargement pour recharger une source de courant rechargeable (21) dans un appareil électronique (17) comprenant un moyen de bobines de chargement (6, 6′) et un moyen (1, 2, 3, 4, 5) pour appliquer un courant au moyen de bobines de chargement à une fréquence prédéterminée, l'appareil électronique comprenant un moyen de bobines secondaires (18) connecté électriquement à la source de courant rechargeable et le moyen de bobines de chargement étant disposé de manière à ce que le moyen de bobines secondaires dans un appareil électronique associé avec le dispositif de chargement ait un courant de la fréquence prédéterminée induit électromagnétiquement, pour recharger la source rechargeable, caractérisé en ce que le moyen de bobines de chargement comprend une paire de bobines de chargement (6, 6′) ayant une forme annulaire ou circulaire et disposées l'une jouxtant l'autre, la polarité d'une des bobines de chargement étant opposée à celle de l'autre bobine de chargement, de manière à produire des champs magnétiques opposés sur les faces externe des bobines de chargement.

2. Dispositif selon la revendication 1, caractérisé en ce qu'une culasse (12) en un matériau magnétique perméable est disposée transversalement par rapport aux bobines de chargement (6, 6′) sur le côté éloigné de celui près duquel le moyen de bobines secondaires (18) d'un appareil électroniques (17) va se placer.

3. Dispositif selon la revendication 1 ou 2, où le moyen de bobines secondaires (18) a un noyau (19) en un matériau magnétique perméable disposé transversalement par rapport aux bobines de chargement (6, 6′) d'un appareil électronique associé avec le dispositif de chargement.

4. Dispositif selon la revendication 1, 2 ou 3, où le moyen pour appliquer un courant aux bobines de chargement (6, 6′) comprend un circuit oscillateur (1) et des circuits de commutation (2, 3,4, 5) contrôlés par la sortie du circuit oscillateur (1),

5. Dispositif selon une quelconque des revendications précédentes, où les bobines de chargement (6, 6′) ont une forme sensiblement triangulaire.

6. Dispositif selon une quelconque des revendications précédentes, où les bobines de chargement (6, 6′) sont connectées en série.

7. Dispositif selon l'une quelconque des revendications précédentes, où l'appareil électronique (17) comprend un ou des composants susceptibles d'être influencés par le courant électrique induit, caractérisé en ce que la fréquence prédéterminée est en dehors de la gamme des fréquences dans laquelle un tel composant ou composants sont influencés.

8. Dispositif selon la revendication 7, où le composant dans l'appareil électronique (17), qui est susceptible d'être influencé, est un moteur ayant un rotor à aimant permanent.

9. Dispositif selon la revendication 7 ou 8, où la fréquence est supérieure à 200 Hz.

10. Dispositif selon la revendication 9, où la fréquence est supérieure à 500 Hz.

11. Dispositif selon la revendication 10, où la fréquence est supérieure à 600 Hz.

12. Dispositif selon la revendication 11, où la fréquence est prédéterminée pour avoir une efficacité de chargement élevée, et elle est approximativement de 1 kHz.

13. Dispositif selon une quelconque des revendications précédentes, comprenant un boîtier (23) pouvant recevoir un appareil électronique (17) jouxtant les bobines de chargement (6, 6′).
